Europäisches Patentamt

European Patent Office

Office européen des brevets

(11) Veröffentlichungsnummer : **0 253 761 B1**

# (12) EUROPÄISCHE PATENTSCHRIFT

(45) Veröffentlichungstag der Patentschrift :
23.10.91 Patentblatt 91/43

(51) Int. Cl.$^5$ : **B23B 31/02, B23B 31/12**

(21) Anmeldenummer : 87810327.4

(22) Anmeldetag : 09.06.87

(54) Spannfutter für Werkzeuge.

(30) Priorität : 18.07.86 DE 3624232

(43) Veröffentlichungstag der Anmeldung :
20.01.88 Patentblatt 88/03

(45) Bekanntmachung des Hinweises auf die
Patenterteilung :
23.10.91 Patentblatt 91/43

(84) Benannte Vertragsstaaten :
AT BE CH DE ES FR GB IT LI NL SE

(56) Entgegenhaltungen :
DE-A- 2 842 783
DE-A- 3 241 528
DE-A- 3 409 494
DE-A- 3 416 966

(73) Patentinhaber : HILTI Aktiengesellschaft
FL-9494 Schaan (LI)

(72) Erfinder : Manschitz, Erwin
Holzbachstrasse 7
W-8034 Germering (DE)

(74) Vertreter : Wildi, Roland
Hilti Aktiengesellschaft Patentabteilung
FL-9494 Schaan (LI)

## Beschreibung

Die Erfindung betrifft ein Spannfutter für Bohrwerkzeuge, mit einem Futterkörper und einem einen Führungsbereich des Futterkörpers durchsetzenden, in eine Durchgangsbohrung des Futterkörpers einragenden Schlagübertragungsdöpper, und wenigstens zwei entlang Führungskanälen des Futterkörpers verschiebbaren und verstellbaren Klemmbacken für die Bohrwerkzeuge.

Aus der DE-OS 34 16 966 ist ein Spannfutter für ein Antriebsgerät bekannt, wobei einem im Spannfutter eingespannten Bohrwerkzeug wahlweise Drehbewegung oder Drehbewegung und Schläge vermittelt werden können. Die Bohrwerkzeuge ragen bei diesem bekannten Spannfutter mit einem im wesentlichen zylindrischen Einsteckschaft in die Durchgangsbohrung eines im wesentlichen hülsenförmigen Futterkörpers ein. Zur Uebertragung von Drehbewegung an das Bohrwerkzeug sind mehrere, in gleichmässigem Winkelabstand zueinander angeordnete, den Einsteckschaft kraftschlüssig fassende Klemmbacken vorgesehen. Ebenfalls zur Vermittlung von Drehbewegung verfügt das Spannfutter über einen radial in die Durchgangsbohrung verschiebbaren Verriegelungskörper zum formschlüssigen Einrücken in am Einsteckschaft allenfalls vorhandene, axial sich erstreckende Mitnahmenuten. Die Ueberlänge der Mitnahmenuten gewährleistet axiale Beweglichkeit der Bohrwerkzeuge im Spannfutter während des Uebertragens der Drehbewegung. Diese axiale Beweglichkeit erlaubt das gleichzeitige Uebertragen von Schlägen durch einen in die Durchgangsbohrung des Futterkörpers einragenden Schlagübertragungsdöpper an die Bohrwerkzeuge und das Weiterleiten der Schläge von den Bohrwerkzeugen an das Bearbeitungsgut.

Sind die Bohrwerkzeuge durch die Klemmbacken nur kraftschlüssig gehalten, was der Fall ist, wenn der Einsteckschaft nicht über Mitnahmenuten verfügt, so können vom Schlagübertragungsdöpper abgegebene Schläge ein Lösen der kraftschlüssigen Halterung der Bohrwerkzeuge bewirken. Demgemäss ist es nicht möglich, durch kraftschlüssige Halterung mittels der Klemmbacken den Bohrwerkzeugen ausschliesslich und zuverlässig Drehbewegung zu vermitteln.

Der Erfindung liegt die Aufgabe zugrunde, bei einem Spannfutter der beschriebenen Art über die kraftschlüssige Halterung mittels der Klemmbacken ein zuverlässiges Uebertragen von Drehbewegung an die Bohrwerkzeuge zu gewährleisten.

Erfindungsgemäss wird die Aufgabe dadurch gelöst, dass im Führungsbereich zwischen der Durchgangsbohrung und dem Führungskanal eines Klemmbackens in einer Durchtrittsöffnung des Futterkörpers ein radial verschiebbares Halteglied mit einem die Wandung des Führungsbereiches im Bereich der Durchtrittsöffnung überstehenden Radialmass angeordnet ist und der werkzeugseitige Endbereich des Schlagübertragungsdöppers und der döpperseitige Endbereich des Klemmbackens Ausweichöffnungen für das Halteglied aufweisen.

Das Halteglied übersteht, je nach Lage der Klemmbacken, die Durchtrittsöffnung entweder zur Durchgangsbohrung oder zum Führungskanal hin. Befindet sich der dem Halteglied zugeordnete Klemmbacken in einer in die Durchgangsbohrung einragenden Klemmstellung, so wird das Halteglied unter Abstützung an der Oberfläche des Klemmbackens in in die Durchgangsbohrung einragender Stellung gehalten. Dabei ragt das Halteglied in eine Ausweichöffnung im werkzeugseitigen Endbereich des Schlagübertragungsdöppers ein und hält diesen so in seiner werkzeugseitigen schlagunwirksamen Endlage. Ein von den Klemmbacken kraftschlüssig gehaltertes Bohrwerkzeug wird folglich vom Schlagübertragungsdöpper nicht beaufschlagt und erfährt ausschliesslich Drehbewegung.

Werden die Klemmbacken hingegen aus der in die Durchgangsbohrung ragenden Klemmstellung in eine Freigabestellung zurückgeführt, so gelangt eine Ausweichöffnung an dem dem Halteglied zugeordneten Klemmbacken in den Bereich der Durchtrittsöffnung, so dass das Halteglied sich in diese Ausweichöffnung verschieben kann. Damit ist der Schlagübertragungsdöpper nicht mehr in seiner schlagunwirksamen Endlage fixiert und führt zur Schlagabgabe Hübe aus.

Vorzugsweise ist das Halteglied als Kugel ausgebildet. Eine Kugel ist ein kostengünstig herzustellendes Maschinenelement, welches sich durch funktionelle Vorteile, wie gute Bewegbarkeit, in der Durchtrittsöffnung auszeichnet.

Mit Vorteil ist die Ausweichöffnung im Schlagübertragungsdöpper als umlaufende Einschnürung ausgebildet. Diese weist zweckmässig einen im Querschnitt konkaven, auf die Krümmung der Kugel abgestimmten Grund auf. Die Einschnürung bildet eine Schulter, die bei in die Einschnürung einragender Kugel als ein Verschieben des Schlagübertragungsdöppers in dessen schlagwirksame Stellung unterbindender Anschlag wirkt.

Nach einer bevorzugten Ausführungsform ist die Ausweichöffnung des Klemmbackens an einer sich entlang des Führungskanals erstreckenden Längsflanke angeordnet und ist zweckmässigerweise als quer zur Längserstreckung des Führungskanals gerichtete Hohlkehle ausgebildet. Werkzeugseitig schliesst an die Längsflanke eine parallel zur Achse der Durchgangsbohrung gerichtete Klemmfläche an. Letztere tritt in Klemmstellung mit dem Einsteckschaft der Werkzeuge in kraftschlüssige Verbindung. Die Ausweichöffnung des Klemmbackens ist nahe dem Uebergang der Längsflanke in die Klemmfläche angeordnet, um möglichst grosse Spannwege der Klemmbacken zu gewährleisten. Im Querschnitt weist die als Hohlkehle ausgebildete Ausweichöffnung ebenso einen konkaven, auf die Krümmung der Kugel abgestimmten Grund auf. Die Tiefe der Hohlkehle entspricht zumindest dem Radialmass, um welches das Halteglied die Wandung des Führungsbereiches übersteht.

Die Erfindung wird nachstehend anhand einer Zeichnung, die ein Ausführungsbeispiel wiedergibt, näher erläutert. Es zeigen:

Fig. 1 ein Spannfutter mit kraftschlüssig einge-spanntem Werkzeug und schlagunwirksam arre-tiertem Schlagübertragungsdöpper, im Längsschnitt;

Fig. 2 einen Schnitt II-II durch das Spannfutter nach Fig. 1 und den Vorderabschnitt eines Steckschlüssels zum Spannen und Lösen der Klemmbacken;

Fig. 3 das Spannfutter nach. Fig. 1 mit in Freigabestellung befindlichen Klemmbacken, einem formschlüssig verriegelten Werkzeug und zur Schlagabgabe freigegebenem Schlagübertragungsdöpper, im Längsschnitt;

Fig. 4 einen Schnitt IV-IV durch das Spannfutter nach Fig. 3.

Das insgesamt mit 1 bezeichnete Spannfutter weist einen im wesentlichen hülsenförmigen Futterkörper 2 auf, der zum Haltezwecke sowie zur Vermittlung von Drehbewegung mit einem nicht gezeigten Antriebsgerät, beispielsweise einer Handbohrmaschine, verbunden ist. Eine Durchgangsbohrung 3 durchsetzt den Futterkörper 2 zentral. Vom Antriebsgerät her ragt ein Schlagübertragungsdöpper 4 unter Führungssitz verschiebbar in die Durchgangsbohrung 3.

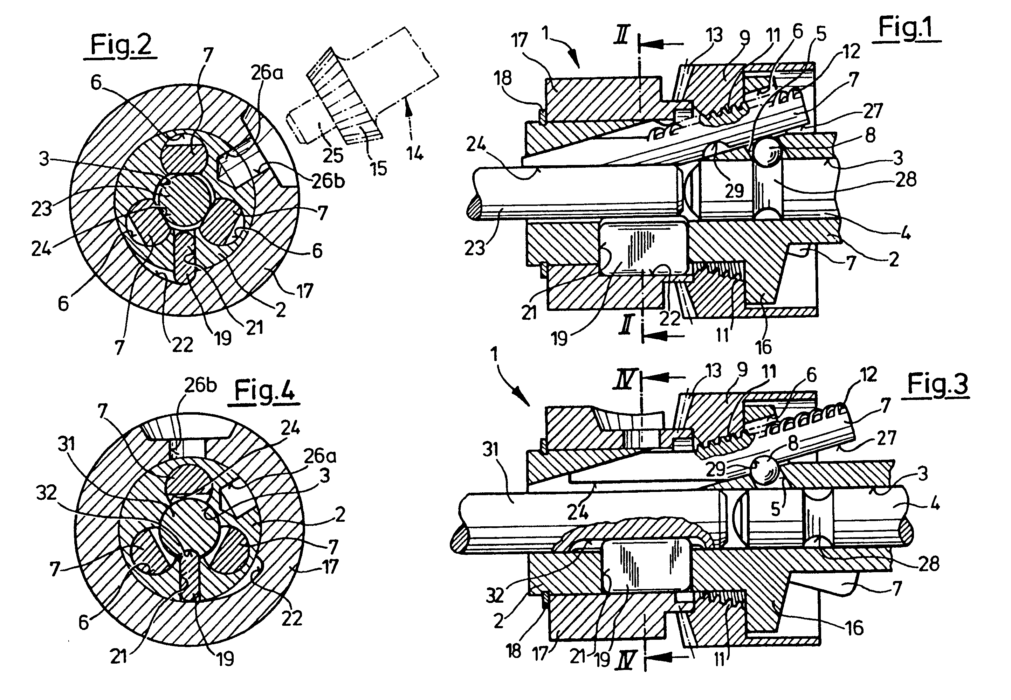

In den der Fig. 1 entnehmbaren Führungsbereich des Futterkörpers 2 für den Schlagübertragungsdöpper 4 mündet eine im Futterkörper 2 angeordnete Durchtrittsöffnung 5 in die Durchgangsbohrung 3 ein. Das andere Ende der Durchtrittsöffnung 5 steht mit einem unter flachem Winkel zur Achse der Durchgangsbohrung 3 längsorientierten Führungskanal 6 für einen Klemmbacken 7 in Verbindung. In der Durchtrittsöffnung 5 ist ein Halteglied in Form einer Kugel 8 verschiebbar gelagert.

Dem gleichzeitigen Längsverschieben dreier in gleichmässigem Winkelabstand zueinander angeordneter Klemmbacken 7 (Fig. 2) dient ein Spannring 9. Dieser weist innenseitig ein Kegelgewinde 11 auf, das mit korrespondierenden Gewindezonen 12 am Rücken der Klemmbacken 7 in Eingriff steht. Zum Spannen und Lösen der Klemmbacken 7 ist am Spannring 9 stirnseitig eine Kegelverzahnung 13 vorgesehen, mit der ein insgesamt mit 14 bezeichneter Steckschlüssel mit einem korrespondierenden Zahnkranz 15 (Fig. 2) in Eingriff gebracht werden kann.

Der Spannring 9 ist zum Antriebsgerät hin an einem Ringflansch 16 des Futterkörpers 2 abgestützt.

In der Gegenrichtung unterbindet eine Verriegelungshülse 17 das Verschieben des Spann ringes 9. Ein im Futterkörper 2 festgelegter Sicherungsring 18 stützt die Verriegelungshülse 17 axial ab. Letztere ist auf dem Futterkörper 2 begrenzt verdrehbar gelagert und dient dem radialen Verstellen eines Verriegelungskörpers 19 in einer Führungsöffnung 21 im Futterkörper 2. Das Verstellen des Verriegelungskörpers 19 zur Durchgangsbohrung 3 hin erfolgt mittels einer Steuerkurve 22 in der Verriegelungshülse 17 (Fig. 2).

Zum Einspannen von Bohrwerkzeugen mit zylin-drischen nutenfreien Einsteckschäften gegebenen-falls unterschiedlichen Durchmessers kommen die Klemmbacken 7 in Einsatz. Die Fig. 1, 2 zeigen einen solchen Einsteckschaft 23, der durch kraftschlüssigen Angriff von Klemmflächen 24 der Klemmbacken 7 zentrisch in der Durchgangsbohrung 3 festgelegt ist. Der Verriegelungskörper 19 kann bei der gezeigten Drehstellung der Verriegelungshülse 17 unter Anlage an der Steuerkurve 22 soweit radial zurückweichen, dass er nicht hinderlich in die Durchgangsbohrung 3 einragt. Der Steckschlüssel 14 wird zum Betätigen der Klemmbacken 7 mit einem Stützzapfen 25 in eine zweiteilige Bohrung, bestehend aus einem Bohrungsteil 26a im Futterkörper 2 und einem Bohrungsteil 26b in der Verriegelungshülse 17, eingeführt. Nur in dieser Drehstellung der Verriegelunshülse 17, in welcher der Verriegelungskörper 19 ausgerückt ist, decken sich die Bohrungsteile 26a, 26b, so dass der Steckschlüssel 14 funktionswirksam eingesetzt werden kann. Durch relatives Verdrehen des Spannringes 9 gegenüber dem Futterkörper 2 lassen sich die Klemmbacken 7 entlang der Durchtrittsöffnungen 5 verschieben. Im Bereich des klemmwirksamen Verschiebeweges der Klemmbacken 7 dient eine von der Klemmfläche 24 ausgehende Längsflanke 27 eines Klemmbackens 7 (Fig. 1) der Abstützung der in die Durchgangsbohrung 3 einragenden Kugel 8. In dieser Stellung greift die Kugel 8 in eine umlaufende Einschnürung 28 des Schlagübertragungsdöppers 4 ein und hält diesen in der in Fig. 1 gezeigten schlagunwirksamen werkzeugseitigen Endlage. Dem Einsteckschaft 23 bzw dem Bohrwerkzeug wird somit über die Klemmbacken 7 nur Drehbewegung vermittelt.

Zum Einsatz eines für Drehbewegung und Schlagübertragung geeigneten Bohrwerkzeugs, dessen Drehmitnahme formschlüssig über den Verriegelungskörper 19 erfolgt, werden die Spannbacken 7 soweit verstellt, dass deren Klemmflächen 24 nicht mehr in die Durchgangsbohrung 3 einragen. In dieser zurückgefahrenen Stellung der Klemmbacken 7 kommt eine Ausweichöffnung in Form einer Hohlkehle 29 im döpperseitigen Endbereich der Längsflanke 27 über die Durchtrittsöffnung 5 zu liegen. Dadurch kann die Kugel 8 unter Eintauchen in die Hohlkehle 29 aus der Durchgangsbohrung 3 zurücktreten. Der Schlagübertragungsdöpper 4 lässt sich folglich wieder in schlagwirksame Position zum Antriebsgerät hin verschieben. Die Fig. 3 zeigt einen Einsteckschaft 31 eines für Drehbewegung und Schläge geeigneten Bohrwerkzeugs. Der Einsteckschaft 31 verfügt über eine Mitnahmenut 32, in welche der Verriegelungskörper 19 durch teilweises Verdrehen der Verriegelungshülse 7 über die Steuerkurve 22 eingerückt wurde. In dieser Drehstellung der Verriegelungshülse 17 stehen die Bohrungsteile 26a, 26b gegenseitig nicht mehr in Deckung, wodurch der funktionswirksame Einsatz des Steckschlüssels 14 unterbunden ist.

Beim Einführen des Einsteckschaftes 31 in die Durchgangsbohrung 3 verschiebt dieser den Schlagübertragungsdöpper 4 in die schlagwirksame Position. Nun überdeckt der werkzeugseitige Endabschnitt des Schlagübertragungsdöppers die Mündung der Durchtrittsöffnung 5, so dass die in die Hohlkehle 29 einragende Kugel 8 nicht in die Durchgangsbohrung 3 radial entweichen kann. Damit ist der in Fig. 3 gezeigte Klemmbacken 7 gegen Verschieben blockiert, so dass ein Verdrehen des Spannringes 9 in dieser Funktionsstellung des Spannfutters 1 nicht möglich ist.

**Patentansprüche**

1. Spannfutter (1) für Bohrwerkzeuge, mit einem Futterkörper (2) und einem einen Führungsbereich des Futterkörpers (2) durchsetzenden, in eine Durchgangsbohrung (3) des Futterkörpers (2) einragenden Schlagübertragungsdöpper (4), und wenigstens zwei entlang Führungskanälen (6) des Futterkörpers (2) verschiebbaren und verstellbaren Klemmbacken (7) für die Bohrwerkzeuge, **dadurch gekennzeichnet,** dass im Führungsbereich zwischen der Durchgangsbohrung (3) und dem Führungskanal (6) eines Klemmbackens (7) in einer Durchtrittsöffnung (5) des Futterkörpers (2) ein radial verschiebbares Halteglied (8) mit einem die Wandung des Führungsbereiches im Bereich der Durchtrittsöffnung (5) überstehenden Radialmass angeordnet ist und der werkzeugseitige Endbereich des Schlagübertragungsdöppers (4) und der döpperseitige Endbereich des Klemmbackens (7) Ausweichöffnungen (28,29) für das Halteglied (8) aufweisen.

2. Spannfutter nach Anspruch 1, dadurch gekennzeichnet, dass das Halteglied als Kugel (8) ausgebildet ist.

3. Spannfutter nach Anspruch 1 oder 2, dadurch gekennzeichnet, dass die Ausweichöffnung im Schlagübertragungsdöpper (4) als umlaufende Einschnürung (28) ausgebildet ist.

4. Spannfutter nach einem der Ansprüche 1 bis 3, dadurch gekennzeichnet, dass die Ausweichöffnung des Klemmbackens (7) an einer sich entlang des Führungskanals (6) erstreckenden Längsflanke (27) angeordnet ist.

5. Spannfutter nach einem der Ansprüche 1 bis 4, dadurch gekennzeichnet, dass die Ausweichöffnung des Klemmbackens (7) als quer zur Längserstreckung des führungskanals (6) gerichtete Hohlkehle (29) ausgebildet ist.

**Claims**

1. Chuck (1) for drilling tools, comprising a chuck body (2) and an impact-transfer-anvil (4) which passes through a guidance area of the chuck body (2) and intrudes into a passage bore (3) of the chuck body (2), and at least two clamping jaws (7) for the drilling tools, which jaws are displaceable along guide channels (6) of the chuck body (2), characterised in that a radially displaceable holding member (8) of a radial dimension which goes beyond the wall of the guidance area in the region of the passage (5) of the chuck body (2) is arranged in the guide area between the throughbore (3) and the guide channel (6) of a clamping jaw (7), and in that the tool-sided end region of the impact-transfer-anvil (4) and the anvil-sided end region of the clamping jaw (7) has diverting apertures (28, 29) for the holding member (8).

2. Chuck according to claim 1, characterised in that the holding member is arranged to be a ball (8).

3. Chuck according to claim 1 or 2, characterised in that the diverting aperture in the impact-transfer-anvil (4) is arranged to be a peripheral constriction (28).

4. Chuck according to one of claims 1 to 3, characterised in that the diverting aperture of the clamping jaws (7) is arranged at a longitudinal flank (27) which extends along the guide channel (6).

5. Chuck according to one of claims 1 to 4, characterised in that the diverting aperture of the clamping jaws (7) is arranged to be a hollow chamber (29) which is transverse relative to the longitudinal extent of the guide channel (6).

**Revendications**

1. Mandrin de serrage (1) pour des outils de perçage, comprenant un corps de mandrin (2) et un percuteur (4) pour la transmission des coups traversant une section de guidage du corps de mandrin (2) et dépassant dans un alésage de passage (3) du corps de mandrin (2), et au moins deux mâchoires de serrage (7) pour les outils de perçage déplaçables le long des canaux de guidage (6) du corps de mandrin (2), **caractérisé en ce** qu'un organe de retenue (8) déplaçable radialement dans une ouverture de passage (5) du corps de mandrin (2) et dont la cote radiale dépasse de la paroi de la section de guidage dans la région de l'ouverture de passage (5) est disposé dans la section de guidage, entre l'alésage de passage (3) et le canal de guidage (6) d'une mâchoire de serrage (7), et que la section terminale du percuteur (4) pour la transmission des coups du côté outil et la section terminale de la mâchoire de serrage (7) du côté percuteur présentent des ouvertures de dégagement (28, 29) pour l'organe de retenue (8).

2. Mandrin de serrage selon la revendication 1, caractérisé en ce que l'organe de retenue est conformé en bille (8).

3. Mandrin de serrage selon l'une des revendications 1 ou 2, caractérisé en ce que l'ouverture de dégagement dans le percuteur (4) pour la transmission des coups est conformée en gorge circulaire (28).

4. Mandrin de serrage selon l'une des revendications 1 à 3, caractérisé en ce que l'ouverture de dégagement de la mâchoire de serrage (7) est disposée sur un flanc longitudinal (27) qui s'étend le long du canal de guidage (6).

5. Mandrin de serrage selon l'une des revendications 1 à 4, caractérisé en ce que l'ouverture de dégagement de la mâchoire de serrage (7) est conformée en congé (29) orienté transversalement à l'extension longitudinale du canal de guidage (6).

Fig.1

Fig.3

Fig.2

Fig.4